(19) Europäisches Patentamt
European Patent Office
Office européen des brevets

(11) **EP 2 943 760 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(21) Anmeldenummer: **15714403.1**

(22) Anmeldetag: **06.02.2015**

(51) Int Cl.:
*G01J 3/18* (2006.01)      *G01J 3/14* (2006.01)
*G01J 3/22* (2006.01)      *G01J 3/02* (2006.01)
*G01J 3/28* (2006.01)      *G01J 3/12* (2006.01)
*A61B 5/00* (2006.01)

(86) Internationale Anmeldenummer:
**PCT/DE2015/200066**

(87) Internationale Veröffentlichungsnummer:
**WO 2015/149759 (08.10.2015 Gazette 2015/40)**

(54) **SPEKTROMETER**

SPECTROMETER

SPECTROMETRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2014 DE 102014206061**
**05.01.2015 DE 102015200034**

(43) Veröffentlichungstag der Anmeldung:
**18.11.2015 Patentblatt 2015/47**

(73) Patentinhaber: **Micro-Epsilon Optronic GmbH**
**01465 Dresden-Langebrück (DE)**

(72) Erfinder: **OTTO, Tobias**
**01465 Langebrück (DE)**

(74) Vertreter: **Patent- und Rechtsanwälte Ullrich & Naumann**
**PartG mbB**
**Schneidmuehlstrasse 21**
**69115 Heidelberg (DE)**

(56) Entgegenhaltungen:
**WO-A2-01/95542        US-A1- 2010 014 082**
**US-A1- 2012 188 541   US-A1- 2012 242 988**

- **V. M. GELIKONOV ET AL: "Linear-wavenumber spectrometer for high-speed spectral-domain optical coherence tomography", OPTICS AND SPECTROSCOPY, Bd. 106, Nr. 3, 1. März 2009 (2009-03-01), Seiten 459-465, XP055028933, ISSN: 0030-400X, DOI: 10.1134/S0030400X09030242 in der Anmeldung erwähnt**

**Beschreibung**

Die Erfindung betrifft ein Spektrometer, umfassend eine Kombination von mindestens einem Gitter und mindestens einem Prisma.

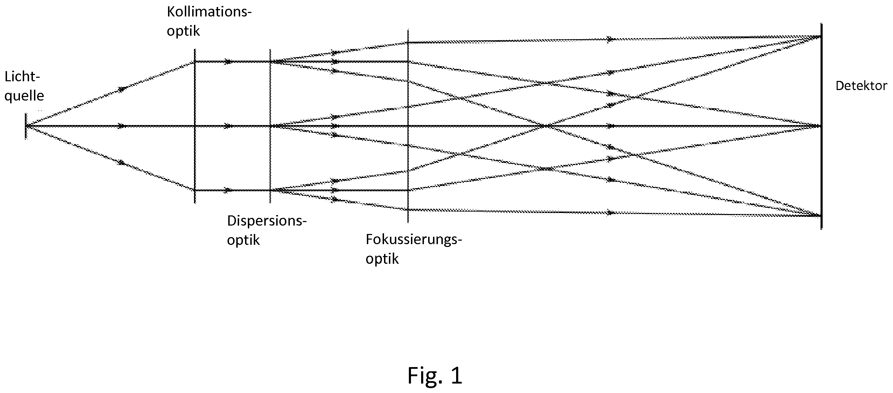

Für die Analyse von breitbandigem Licht kombinieren klassische Weißlicht-Spektrometer wenigstens eine Kollimations-, eine Dispersions- und eine Fokussierungsoptik mit einen Detektor, welcher heutzutage üblicherweise als Zeilen- oder Matrixbildsensor ausgeführt ist, siehe Fig. 1. Alle Optiken bestehen wiederum aus jeweils mindestens einem Element. Als Kollimations- und Fokussierungselemente kommen üblicherweise Linsen zum Einsatz, andere Ausführungen sind allerdings ebenfalls bekannt. Für die Erzeugung der notwendigen Dispersion werden sowohl einzeln als auch in Kombination Prismen und Gitter verwendet. Spektrometer die ein Prisma und Gitter in Kombination als dispersive Elemente verwenden, sind aus der US 2010/0014082 A1 oder US 2012/0242988 A1 bekannt.

Die Dispersionsoptik dient zur Erzeugung der Winkeldispersion D, d.h. zur Änderung der Ausbreitungsrichtung des Lichts in Abhängigkeit von der Wellenlänge. Im Zusammenspiel mit der Fokussierungsoptik wird das so aufgespaltete Licht - Spektrum - an verschiedenen Orten auf dem Detektor abgebildet. Letzterer ermöglicht die Umwandlung des Intensitätsverlaufs über das abgebildete Spektrum in ein analoges Signal, indem der lineare Zusammenhang zwischen Lichtintensität und Fotostrom ausgenutzt wird. Das analoge Signal wird in vielen aktuellen Anwendungen digitalisiert, in ein Rechnersystem, z.B. PC, FPGA, etc., eingespeist und dort ausgewertet.

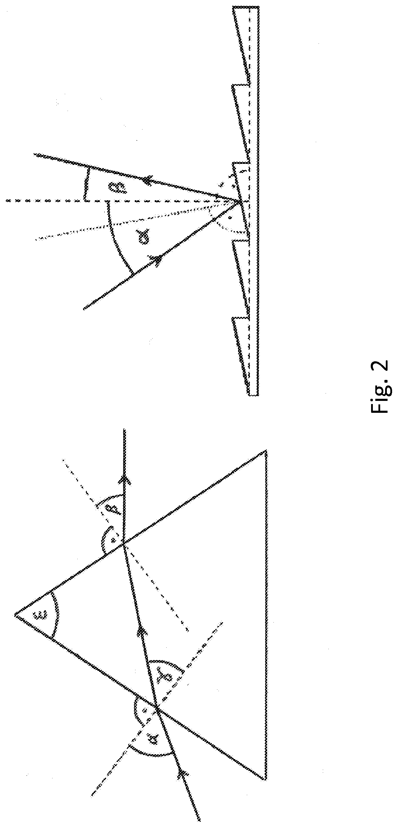

Die Abbildungscharakteristik des Spektrometers ist sehr stark von der Art und Anordnung der optischen Elemente abhängig. Betrachtet man zunächst nur die einfachsten optischen Aufbauten und dabei nur das zentrale dispersive Element, werden zwei Gattungen sichtbar: Prismen- und Gitterspektrometer. Im ersten Fall ist der Aufbau immer transmissiv, während in zweiten Fall auch reflexive Anordnungen möglich werden, siehe Fig. 2.

Die Winkeldispersion eines Prismenspektrometers resultiert aus der Wellenlängenabhängigkeit des Brechungsindex n des Prismenmaterials. Unter Anwendung des Snelliusschen Brechungsgesetzes und mit Prismen-Einfallswinkel $\alpha$, zugehörigem Brechungswinkel $\gamma$, Prismen-Ausfallswinkel $\beta$, Wellenlänge $\lambda$ sowie Prismawinkel $\varepsilon$ ergeben sich für die Strahlablenkung am Prisma:

$$\sin(\beta) = n(\lambda)\sin\left(\varepsilon - \arcsin\left(\frac{\sin(\alpha)}{n(\lambda)}\right)\right)$$

Formel 1: Ablenkungsgleichung für ein Prisma

$$D = \frac{d\beta}{d\lambda} = \frac{\sin(\varepsilon)}{\cos(\gamma)\cos(\beta)}\frac{dn}{d\lambda}$$

Formel 2: Dispersionsgleichung für ein Prisma

Die Winkeldispersion eines Gitterspektrometers ergibt sich entsprechend der Gittergleichung und mit Ablenkwinkel $\beta$, Beugungsordnung $\mu$ sowie Gitterkonstante g zu:

$$D = \frac{d\beta}{d\lambda} = \frac{\mu}{g\cos(\beta)}$$

Formel 3: Dispersionsgleichung für ein Gitter

Analysiert man Formel 2 und Formel 3 hinsichtlich der Dispersionscharakteristik, wird sehr schnell der nichtlineare Zusammenhang zwischen Wellenlänge und Ablenkung deutlich. Bei Einsatz eines Gitters ist - entsprechend der gewählten Definition - ein linearer Zusammenhang zwischen Dispersion - und damit Abbildungsposition - und Wellenlänge nur in einem engen Bereich um $\beta = 0$ gegeben. Aufgrund der mehrfachen, nicht-linear eingehenden Parameter ist beim Einsatz eines Prismas die Auslegung für den linearen Zusammenhang zwischen Dispersion und Wellenlänge noch schwieriger. Durch geeignete Kombination optischer Komponenten lässt sich für das Gesamtsystem jedoch trotzdem eine annähernd lineare Abbildung hinsichtlich der Wellenlänge erzeugen, siehe z.B. US 6,661,513, Granger, 2003.

Je nach Anwendung ist ein lineares Dispersionsverhalten in Bezug auf die Wellenlänge jedoch nicht von Vorteil. Es existieren verschiedene Messverfahren, z.B. konfokal-chromatische Abstandsmessung und weißlicht-interferometrische Verfahren, bei denen die Messgröße bzw. die zugrunde liegenden Signale naturgemäß nichtlinear in der Wellenlänge kodiert sind. Ist die Abbildung im Spektrometer nicht an diesen Zusammenhang angepasst, müssen die Signale vor der eigentlichen Auswertung mehr oder weniger aufwendig umgerechnet werden. Dieser Zwischenschritt bringt zwei wesentliche Nachteile mit sich. Zum einen werden dafür zusätzliche Ressourcen benötigt und zum anderen nahezu immer zusätzliche Fehler induziert. Selbst bei erfolgreicher und fehlerfreier Reskalierung kann es zu Einschränkungen hinsichtlich der Messgrößen kommen. Ein prominentes Beispiel dafür sind die weißlicht-interferometrischen Verfahren. Bei diesen wird die maximal messbare Frequenz bereits durch die Abbildung entsprechend dem Nyquist-Kriterium - und damit der größten Änderung der Kreiswellenzahl k benachbarter Detektorelemente - begrenzt. Eine nachträgliche Reskalierung kann daran nichts mehr ändern.

Verschiedene Erfindungen versuchen, dieses Problem analog zur Linearisierung in der Wellenlänge durch den Einsatz zusätzlicher optischer Komponenten bzw. durch die Kombination von Gittern und Prismen zu lösen. Ein früher Vorschlag ist durch W. A. Traub, "Constant-dispersion grism spectrometer for channeled spectra", JOSA A, Vol. 7, Issue 9, pp. 1779-1791 (1990) beschrieben worden. Grundgedanke ist die Kombination eines Gitters und eines Prismas - Gitterprisma - und Nutzung des unterschiedlichen Dispersionsverhaltens zum Ausgleich der Nichtlinearitäten. Der Vorschlag basiert jedoch auf der Materialdispersion des Prismas, welche zumindest bei schwach dispersiven Prismen dem Effekt der Winkeltransferfunktion des Gitters untergeordnet ist. Eine spätere Anwendung der Linearisierung in der Kreiswellenzahl wird in US 6,816,258, Hutchin, 2004 beschrieben. Diese Erfindung nutzt ein Transmissions-Gitter-Prisma für die Linearisierung, wobei das Gitter in verschiedene Seiten des Prismas integriert werden kann. US 7,929,134, Hu et al., 2011 ist ein Beispiel eines ähnlichen Aufbaus, der jedoch auf der räumlichen Trennung von Gitter und Prisma basiert. US 2012024298, Saxer et al., 2012 beschreibt einen erweiterten Ansatz, der ebenfalls eine Linearisierung in der Kreiswellenzahl anstrebt. Zusätzlich wird dabei der Aufbau so flexibel gestaltet, dass eine Änderung der Spektrometereigenschaften während der Anwendung möglich wird.

Eine Mindestforderung für den zu erreichenden Grad der maximal verbleibenden Linearitätsabweichung eines k-linearen Spektrometers - 100%/m bei m Detektorelementen - wurde durch Gelikonov et al., "Linear-Wavenumber Spectrometer for High-Speed Spectral-Domain Optical Coherence Tomography", Optics and Spectroscopy, 2009, Vol. 106, No. 3, pp. 459-465 formuliert. Die Autoren verdeutlichen damit, dass die Schwierigkeit der Aufgabe unter anderem dadurch zunimmt, dass Detektoren mit einer größeren Anzahl von Detektorelementen - Pixeln - zum Einsatz kommen. Wurden in den oben beschriebenen Anwendungen anfangs noch 256 Elemente genutzt, waren es später 512 und aktuell sind 1024 oder 2048 Elemente keine Seltenheit mehr. In Zusammenspiel mit Lage und Breite des genutzten Wellenlängenbereichs kann die Forderung bezüglich der verbleibenden Nichtlinearität damit schnell wieder kritisch werden.

Die Analyse der Abbildungscharakteristik kann jedoch nur ein Teil der Gesamtbewertung eines Spektrometers sein. In vielen Anwendungen kommen noch weitere, nicht zu unterschätzende Bewertungsfaktoren hinzu. Während zumindest bei industriellen Anwendungen die Frage nach dem Preis des Systems sehr schnell eine Rolle spielt, sind andere Faktoren erst auf den zweiten Blick ersichtlich. Ein solcher Faktor ist die Effizienz des Spektrometers, d.h. welcher Anteil des ankommenden Lichts noch durch den Detektor aufgezeichnet wird. Dies bestimmt maßgeblich die notwendige Leistung der Lichtquelle bzw. - falls diese nicht beeinflussbar ist - die Sensitivität des Detektors. Beide Komponenten haben Einfluss auf Auslegung und Preis des Systems. Ein ebenfalls nicht zu unterschätzender Faktor ist durch den Platzbedarf des Systems gekennzeichnet. Gerade beim Einsatz mehrerer oder vieler Spektrometer darf diese Frage nicht unterschätzt werden. Bei klassischer Anordnung erhöhen die für die k-Linearisierung notwendigen optischen Zusatzelemente die Platzanforderungen in erheblichem Maße. Eine aktuelle Anwendung - US 8,102,537, Akishiba, 2012 - verzichtet zugunsten des Raumgewinns sogar vollständig auf die optische k-Linearisierung und führt die Korrektur durch Reskalierung des Spektrums durch. Dieses System, das deutlich auf industrielle Anwendung ausgelegt ist, unterstreicht sehr eindrucksvoll die Bedeutung der Spektrometereigenschaft Platzbedarf.

Die klassische Herangehensweise für die Optimierung der Gitter-Prisma-Kombinationen ist dadurch gekennzeichnet, dass im ersten Schritt mehr oder weniger vereinfachte Komponentengleichungen aufgestellt werden. Der Grad der Vereinfachungen wurde und wird je nach Verfügbarkeit der Informationen und unter Berücksichtigung der verfügbaren Rechenkapazitäten gewählt. Aus den Komponentengleichungen wird entsprechend der vorgesehenen Komponentenanordnung eine Systemgleichung ermittelt und zusammen mit den freien Parametern der Simulation bzw. Optimierung zugeführt. Aus dem Ergebnis dieses Vorgangs lassen sich anschließend die entsprechend der freien Parameter optimalen Werte ableiten. Diese Werte definieren insgesamt das globale Minimum hinsichtlich des Zielwertes, z.B. der verbleibenden Abweichung vom k-linearen Verlauf der Dispersion. In den meisten Fällen sind die bestimmten Werte nicht oder nur schwer realisierbar. Deshalb müssen abschließend noch real verfügbare Komponenten gefunden werden, deren Eigenschaften möglichst nahe an den bestimmten, optimalen Parametern liegen, siehe Gelikonov et al.; Hu et al., "Fourier domain optical coherence tomography with a linear-in-wavenumber spectrometer", Optics Letters, 2007, Vol. 32, No. 24, pp. 3525-3527.

Bei näherer Betrachtung der bekannten Anwendungen des klassischen Ansatzes wird deutlich, dass - nach Wissenstand der Autoren - bisher immer transmissive Aufbauten verfolgt wurden. Zwar wird der Einsatz von Reflexionsgittern nie ausgeschlossen, k-lineare Spektrometer mit Reflexionsgitter sind aber nicht bekannt. Der wesentliche Vorteil eines Transmissionsgitters liegt darin begründet, dass ein- und ausfallende Strahlen automatisch getrennt sind. Dadurch lassen sich die anderen optischen Komponenten ohne größeren Aufwand in Strahlrichtung davor bzw. dahinter positionieren. Nachteile müssen allerdings hinsichtlich ökonomischer Aspekte in Kauf genommen werden. Einerseits sind Transmissionsgitter - zumindest im Nahinfrarotbereich - vergleichsweise teuer und andererseits sind sie nur in wenigen Variationen hinsichtlich der technischen Parameter erhältlich. Im Gegensatz dazu sind Reflexionsgitter deutlich preiswerter und auch in breiter Palette erhältlich. Allerdings weisen sie nur dann eine gute Effizienz auf, wenn sie im bzw. nahe des Littrow-Modus betrieben werden. Dieser ist beim Reflexionsgitter gerade dadurch gekennzeichnet, dass ein- und ausfallende Strahlen übereinanderliegen. Die Trennung der Strahlen scheint im ersten Moment nur dadurch möglich, dass man entweder deutlich vom Littrow-Modus abweicht oder einen zusätzlichen Strahlteiler einsetzt. Beide Ansätze wirken sich allerding deutlich nachteilig auf die Effizienz des Spektrometers auf und haben kaum Bedeutung in der Praxis, siehe US 6,661,513, Granger, 2003; US 6,816,258, Hutchin, 2004; US 7,929,134, Hu et al., 2011.

Die der im Folgenden beschriebenen Erfindung zugrundeliegende Aufgabe lässt sich grob als Kombination der oben bereits beschriebenen Anforderungen und zusätzlichen Einschränkungen zusammenfassen. Es musste ein Weg gefunden werden, der es erlaubt, ein möglichst kompaktes Spektrometer zu entwerfen, welches die folgenden Bedingungen erfüllt. Zum Ersten sollte die k-Linearisierung bereits optisch erfolgen und dem von Gelikonov et al. formulierten Kriterium genügen. Dabei waren 2048 Detektorpixel vorzusehen. Zum Zweiten musste die Anzahl der notwendigen optischen Elemente minimiert werden. Des Weiteren sollten Platzbedarf und Justageaufwand minimiert und letztendlich auch die Komponentenkosten reduziert werden. Zusätzlich sollte der Gesamtaufbau möglichst robust gegen thermische Einflüsse ausgelegt werden.

Betrachtet man die gestellten Forderungen in ihrer Gesamtheit und im Zusammenspiel mit den bekannten Lösungsansätzen wird sehr schnell deutlich, dass sich einige Forderungen - insbesondere hohe Kompaktheit und ausreichende k-Linearisierung - scheinbar ausschließen oder zumindest doch ungünstig beeinflussen. Die hohe Zahl von sensitiven Elementen des Detektors verschärft diese Problematik weiter. Für die Lösung der gestellten Aufgabe musste deshalb in einigen Punkten deutlich von den bekannten Ansätzen abgewichen werden.

Die voranstehende Aufgabe wird durch ein Spektrometer mit den Merkmalen des Anspruchs 1 gelöst.

Vorteilhafte Ausgestaltungen des Spektrometers sind in den Unteransprüchen beschrieben.

Im Hinblick auf eine besonders sichere und genaue Messung kann das Gitter derart positioniert oder orientiert sein, dass es im Littrow-Modus betreibbar ist.

In weiter vorteilhafter Weise kann eine für die Fokussierung von Lichtstrahlen auf einen Detektor eingesetzte Linsenanordnung für eine Justierung der k-Linearitäten mit einbezogen werden.

In weiter vorteilhafter Weise kann in dem Spektrometer eine Faltung von Strahlengängen, vorzugsweise mittels eines Faltungsspiegels, realisiert sein.

Die Entwicklung des erfindungsgemäßen Spektrometers hatte ihren Ausgangspunkt zunächst im klassischen Ansatz, d.h. in der Suche nach einer günstigen Gitter-Prisma-Kombination, welche die hohen Anforderungen an die gestellte k-Linearität erfüllen kann. Nahezu zwangsläufig findet man die Lösungen nur in der Nähe des globalen Optimums sinnvoller Anordnungen, welche unter anderem auch durch einen nicht unerheblichen Winkel zwischen Gitter und Prismenfläche gekennzeichnet sind. Wie oben beschrieben, wird man typischerweise einen Aufbau mit einem Transmissionsgitter wählen. Entsprechend der erforderlichen Strahlführung für die spektrale Aufspaltung ergeben sich dadurch erhebliche optische Abstände zwischen den beteiligten Komponenten. Eine Reduktion der geometrischen Abstände ist dementsprechend nur mit Hilfe zusätzlicher optischer Komponenten, beispielsweise Faltungsspiegel, möglich und folglich einer Lösung der Aufgabenstellung abträglich. Die Erfindung überwindet die genannten Herausforderungen durch Einführung zweier wesentlicher Änderungen. Zum Ersten wird das Transmissionsdurch ein Reflexionsgitter ersetzt und das Prisma so positioniert, dass es zweimal durchlaufen werden kann. Dabei wird der scharf definierte Einsatzpunkt der Totalreflexion an einer Prismainnenseite genutzt, um eine Trennung zwischen den auf dem Gitter ein- und auslaufenden Strahlverläufen zu gewährleisten. In Folge dessen kann das Reflexionsgitter so orientiert werden, dass es im Littrow-Modus betrieben wird und keine relevanten Einbußen in der Effizienz entstehen. Das Prisma, welches nach dem Gitter in erfindungsgemäßer Ausprägung zum zweiten Mal durchlaufen wird, kann folglich sehr nahe bis einschließlich mit Kontakt zum Gitter positioniert werden. Zum Zweiten wird das für die Refokussierung ohnehin benötigte Linsensystem in die Optimierung der k-Linearität mit einbezogen. Dieser Schritt wird notwendig, da der Einsatz der Reflexionsgitter-Prisma-Anordnung zwar eine sehr effiziente und kompakte Strahlführung ermöglicht, nach klassischer Betrachtung - Gelikonov et al. - aber allein nicht mehr den Anforderungen an die k-Linearität genügt. Der von der Hauptanordnung nicht aufgebrachte Anteil der notwendigen Linearisierung wird daher durch den gezielten Einsatz von Verzeichnungseffekten der Refokussierungslinsen übernommen.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung von Ausführungsbeispielen der erfindungsgemäßen Lehre anhand der Zeichnung zu verweisen. In Verbindung mit der Erläuterung der bevorzugten Ausführungsbeispiele der erfindungsgemäßen Lehre anhand der Zeichnung werden auch im Allgemeinen bevorzugte Ausgestaltungen und Weiterbildungen der Lehre erläutert. In der Zeichnung zeigen

Fig. 1    in einer schematischen Darstellung ein herkömmliches Spektrometer,

Fig. 2    in einer schematischen Darstellung typische Strahlenverläufe bei einem Prisma und einem Gitter und

Fig. 3    in einer schematischen Darstellung ein Ausführungsbeispiel eines erfindungsgemäßen Spektrometers.

Fig. 1 zeigt in einer schematischen Darstellung ein herkömmliches Spektrometerlayout mit einer Kollimations-, einer Dispersions- und einer Fokussierungsoptik mit einem Detektor und einer Lichtquelle.

Fig. 2 zeigt in einer schematischen Darstellung Strahlenverläufe in einem Prisma und bei einem Gitter mit den entsprechenden Winkelbeziehungen einfallender und ausfallender Strahlen.

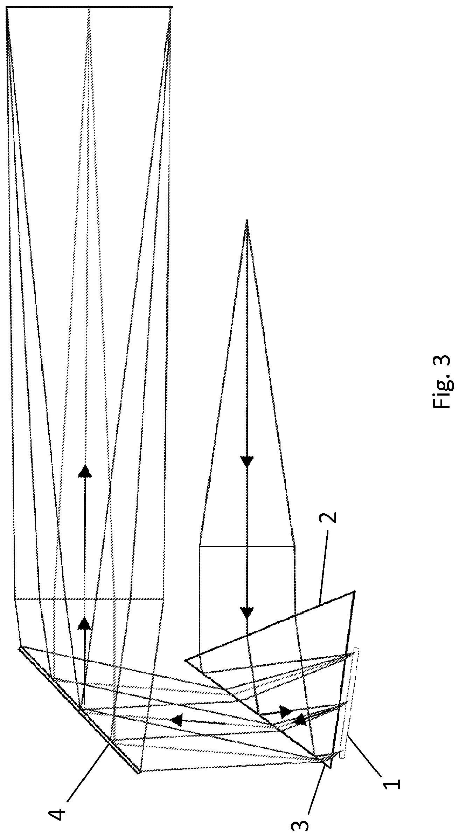

Fig. 3 zeigt in einer schematischen Darstellung ein Ausführungsbeispiel eines erfindungsgemäßen Spektrometers. Zusammengefasst trifft hierbei das kollimierte, einfallende Strahlenbündel mit einem definierten Winkel auf die erste Prismenfläche, so dass es nach einer ersten Strecke im Prisma 2 an der zweiten Prismenfläche 3 noch sicher mit Totalreflexion reflektiert wird. Nach einer zweiten Strecke im Prisma 2 treten die Strahlen an der dritten Seitenfläche aus und fallen auf das Reflexionsgitter 1. Hier werden die Lichtstrahlen des Bündels entsprechend der jeweiligen Wellenlänge gebeugt und fallen unter einem vom vorherigen Ausfallswinkel verschiedenen Winkel wieder auf die dritte Seitenfläche des Prismas 2. Nach einer dritten Strecke im Prisma 2 treten die Strahlen an der zweiten Prismenfläche 3 wieder aus. Anschließend wird das finale Linsensystem durchlaufen, das die Strahlenbündel entsprechend ihrer Wellenlänge auf den Detektor fokussiert. Insgesamt sorgt die Anordnung Gitter-Prisma zunächst für eine noch ungenügende k-Linearisierung und erst im Zusammenspiel mit der Fokussierungsoptik ist eine entsprechend gute Korrektur möglich.

Im Hinblick auf höhere Kompaktheit entsteht ein weiterer Vorteil des erfindungsgemäßen Aufbaus auch durch die im Vergleich zu herkömmlichen Kombinationen von Gitter und Prisma, siehe beispielsweise US 6,661,513, US 6,816,258, US 7,929,134, etc., deutlich geringeren geometrischen Abstände der einzelnen Komponenten. Diese resultieren unter anderem daraus, dass notwendige optische Wege in der Gitter-Prisma-Kombination übereinander liegen. Durch die geringeren notwendigen Abstände werden auch die notwendigen Größen von Folgeelementen positiv beeinflusst. Insgesamt werden so selbst beim Einsatz von Katalogkomponenten kleinere optische Komponenten, z.B. Linsen, benötigt. Diese können üblicherweise günstiger beschafft werden, was die Gesamtkosten des Spektrometers reduziert.

Die Kompaktheit oder Form des Spektrometers lässt sich zusätzlich zu den bisher beschriebenen Eigenschaften der Erfindung durch geeignete Faltung der Strahlengänge weiter erhöhen oder anpassen. Fig. 3 beinhaltet zur Demonstration exemplarisch einen Faltungsspiegel 4.

In praktischer Hinsicht konnte bei der Ausarbeitung und Umsetzung der Erfindung von einem bekannten System ausgegangen werden, mit dem im Folgenden der Vergleich durchgeführt wird. Das zugehörige Spektrometer wurde für die Abbildung auf 2048 Pixel ausgelegt und besitzt inklusive Gehäuse eine Höhe von rund 9cm bei einer Grundfläche von rund 340cm$^2$. Die Abbildung erfolgt linear in der Kreiswellenzahl. Das zugrundeliegende optische System basiert auf der räumlich getrennten Kombination von Transmissionsgitter und Prisma und wurde bereits größenoptimiert. Das entsprechend der oben beschriebenen Erfindung neu entwickelte System benötigt für eine gleichwertige Abbildung auf 2048 Pixel bei einer reduzierten Grundfläche von rund 130cm$^2$ nur noch eine Höhe von rund 4cm. Dies entspricht einer Reduktion auf <20% des Ausgangsvolumens, wobei der Vergleich aufgrund der unterschiedlichen Form der Grundflächen vorsichtig interpretiert werden muss.

Obwohl die bevorzugte Umsetzung der Erfindung ein kompaktes Spektrometer mit linearer Charakteristik bezüglich der Kreiswellenzahl vorstellt, ist die Erfindung jedoch nicht auf diesen Anwendungsfall begrenzt. Eine weitere Ausprägung der Erfindung kann so ausfallen, dass die Linearität nicht in der Kreiswellenzahl sondern in der Wellenlänge entsteht. Das kann zwar prinzipiell auch direkt durch den Einsatz eines geeigneten Gitters erreicht werden, unterliegt dann allerdings den bereits genannten Einschränkungen hinsichtlich der Linearitätsabweichung und der notwendigen Ein- und Ausstrahlwinkel. Für die Reduktion der Linearitätsabweichung werden nach Stand der Technik üblicherweise optische Zusatzelemente, z.B. Prismen, verwendet, die einfach durchstrahlt werden. Unter Nutzung des erfindungsgemäßen Aufbaus, d.h. Nutzung der Totalreflexion im Prisma und mehrfache Durchstrahlung, lassen sich auch hier deutlich kompaktere Spektrometer konstruieren. Wie bereits oben beschrieben, werden sich häufig zusätzlich auch Vorteile hinsichtlich der Komponentenpalette als auch des Preises ergeben.

Obwohl bei der Kombination von Gitter und Prisma üblicherweise die Linearität bezüglich der Kreiswellenzahl oder der Wellenlänge angestrebt wird, ist dies nicht bei allen Anwendungen sinnvoll. Ein bekanntes Beispiel sind konfokal-chromatische Messsysteme, deren Abstandskennlinie weder in der Wellenlänge noch in der Kreiswellenzahl linear ist. Üblicherweise werden bei solchen Systemen Spektrometer verwendet, die eine annähernd lineare Wellenlängencharakteristik aufweisen. Dazu werden meist einfache Aufbauten aus Reflexionsoder Transmissionsgitter in Kombination mit Abbildungsoptiken genutzt. Mit einer günstigeren Spektrometercharakteristik lässt sich jedoch auch hier der Aufwand der Nachverarbeitung deutlich verringern. Gleichzeitig erhöht sich oft auch die Aussagequalität, z.B. in Form einer reduzierten Linearitätsabweichung der Messwerte.

Für die Erzeugung einer linearen Charakteristik bezüglich des Objektabstands müssten die Spektrometer konfokal-chromatischer Systeme allerdings anders aufgebaut werden. Eine lineare Charakteristik hinsichtlich der Kreiswellenzahl wäre dem oben beschriebenen Ansatz - linear in der Wellenlänge - bereits deutlich überlegen, stellt jedoch noch nicht die optimale Konfiguration dar. Vielmehr müsste die Nichtlinearität des Dispersionsverhaltens im Messkopf entsprechend des genutzten Wellenlängenbereichs berücksichtigt und durch geeignete Auslegung des Dispersionsverhaltens im Spektrometer ausgeglichen werden. Nach aktuellem Wissensstand der Autoren existiert am Markt kein System, das diesen Ansatz verfolgt. Dies liegt vermutlich in den Kosten für die notwendigen Zusatzkomponenten sowie den sich ergebenden größeren Spektrometern begründet. Möglicherweise ist aber auch einfach das Kosten-Nutzen-Verhältnis noch nicht akzeptabel. Durch Anwendung des erfindungsgemäßen Aufbaus lässt sich dieses Verhältnis weiter verbessern.

Je nachdem, wie komplex die Dispersionskorrektur im Spektrometer ausgelegt wird, kann es hilfreich sein, den direkten Kontakt bzw. die Integration von Gitter und Prisma aufzulösen. Dadurch kann ein Winkel zwischen Gitter und Prisma eingefügt werden, ohne die grundlegenden Eigenschaft Totalreflexion im Prisma zu opfern. Der zusätzliche Winkel erweitert die Freiheitsgrade bei der Optimierung der Linearitätsabweichung zu Kosten eines höheren Justageaufwands.

Neben den bereits beschriebenen Ausführungen der Erfindung lässt sich der Ansatz auch überall dort verwenden, wo bisher Gitter-Prisma-Kombinationen mit einfacher Durchstrahlung eingesetzt wurden. Preis und Größe von Spektrometern spielen bei industriellen Anwendungen häufig eine große Rolle. Zwar werden bestehende System nicht angepasst werden, bei der Neuentwicklung von industriellen Spektrometern bietet die Erfindung in dieser Hinsicht jedoch deutliche Vorteile.

Hinsichtlich weiterer vorteilhafter Ausgestaltungen des erfindungsgemäßen Spektrometers wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Spektrometers lediglich zur Erörterung der beanspruchten Lehre dienen, diese jedoch nicht auf die Ausführungsbeispiele einschränken.

**Bezugszeichenliste**

| 1 | Gitter, Reflexionsgitter |
| 2 | Prisma |
| 3 | Seite, zweite Prismenfläche |
| 4 | Faltungsspiegel |

**Patentansprüche**

1.   Spektrometer, umfassend eine Kombination von mindestens einem Gitter (1) und mindestens einem Prisma (2), wobei zur Realisierung eines Kompaktspektrometers in mindestens einem Prisma (2) Totalreflexion genutzt wird, wobei als Gitter (1) ein Reflexionsgitter (1) verwendet ist, wobei das mindestens eine Prisma (2) so positioniert ist, dass es von einem Lichtstrahl zweimal durchlaufen wird, wobei der Einsatzpunkt der Totalreflexion an einer Prismainnenseite dazu genutzt wird, eine Trennung zwischen den auf dem Gitter einlaufenden und den auslaufenden Strahlverläufen zu gewährleisten, und wobei die Spektrometercharakteristik linear in der Kreiswellenzahl ist oder wobei das Spektrometer den dispersionsbedingten nichtlinearen Zusammenhang zwischen Wellenlänge und Fokuspunkt eines konfokal-chromatisch arbeitenden Messsystems so kompensiert, dass die Gesamtcharakteristik linear im Objektabstand wird, oder wobei die Spektrometercharakteristik linear in der Wellenlänge ist.

2.   Spektrometer nach Anspruch 1, **dadurch gekennzeichnet, dass** das Gitter (1) derart positioniert oder orientiert ist, dass es im Littrow-Modus betreibbar ist.

3.   Spektrometer nach Anspruch 1 oder 2, **dadurch gekennzeichnet, dass** der von der Gitter-Prisma-Anordnung nicht aufgebrachte Anteil der angestrebten Spektrometercharakteristik durch den gezielten Einsatz von Verzeichnungseffekten der nachfolgend durchlaufenen Linsen übernommen wird.

4.   Spektrometer nach Anspruch 1, 2 oder 3, **dadurch gekennzeichnet, dass** in dem Spektrometer eine Faltung von Strahlengängen, vorzugsweise mittels eines Faltungsspiegels (4), realisiert ist.

**Claims**

1.   Spectrometer comprising a combination of at least one grid (1) and at least one prism (2), wherein in order to produce a compact spectrometer total reflection is used in at least one prism (2), wherein a reflection grid (1) is used as a grid (1), wherein the at least one prism (2) is positioned in such a manner that a light beam passes through it twice, wherein the point of application of the total reflection at an inner prism side is used to ensure a separation between the incoming and outgoing beam paths on the grid, and wherein the spectrometer characteristic is linear in the wavelength constant or wherein the spectrometer compensates for the dispersion-related non-linear relationship between the wavelength and focal point of a measurement system which operates in a confocal/chromatic manner in such a manner that the total characteristic is linear in the object distance, or wherein the spectrometer characteristic is linear in the wavelength.

2. Spectrometer according to claim 1, **characterised in that** the grid (1) is positioned or orientated in such a manner that it can be operated in Littrow mode.

3. Spectrometer according to claim 1 or claim 2, **characterised in that** the proportion of the desired spectrometer characteristic which is not supplied by the grid/prism arrangement is taken over by the selective use of distortion effects of the lenses which are subsequently passed through.

4. Spectrometer according to claim 1, 2 or 3, **characterised in that** in the spectrometer a folding of beam paths is carried out, preferably by means of a folding mirror (4).

**Revendications**

1. Spectromètre, comprenant une combinaison d'au moins une grille (1) et d'au moins un prisme (2), moyennant quoi, pour la réalisation d'un spectromètre compact, dans au moins un prisme (2), une réflexion totale est utilisée, moyennant quoi, en, tant que grille (1), une grille de réflexion (1) est utilisée, l'au moins un prisme (2) étant positionné de façon à ce qu'il soit traversé deux fois par un rayon lumineux, le seuil de déclenchement de la réflexion totale au niveau d'un côté interne du prisme étant utilisé pour garantir une séparation entre les trajets des rayons arrivant sur la grille et les trajets des rayons sortants et

la caractéristique du spectromètre étant linéaire dans le nombre d'ondes circulaires ou

le spectromètre compensant la relation non linéaire, due à la dispersion, entre la longueur d'onde et le point focal d'un système de mesure fonctionnant de manière confocale-chromatique de façon à ce que la caractéristique totale devienne linéaire dans la distance d'objet ou

la caractéristique du spectromètre étant linéaire dans la longueur d'onde.

2. Spectromètre selon la revendication 1, **caractérisé en ce que** la grille (1) est positionnée ou orientée de façon à ce qu'elle puisse être exploitée en mode Littrow.

3. Spectromètre selon la revendication 1 ou 2, **caractérisé en ce que** la part, non appliquée par le dispositif grille-prisme, de la caractéristique du spectromètre visée est prise en charge par une utilisation ciblée d'effets de distorsion des lentilles précédemment traversées.

4. Spectromètre selon la revendication 1, 2 ou 3, **caractérisé en ce que**, dans le spectromètre, un pliage de trajets de rayons est réalisé, de préférence au moyen d'un miroir de pliage (4).

Lichtquelle

Kollimationsoptik

Dispersionsoptik

Fokussierungsoptik

Detektor

Fig. 1

Fig. 2

EP 2 943 760 B1

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100014082 A1
- US 20120242988 A1
- US 6661513 B, Granger
- US 2003 B
- US 6816258 B, Hutchin
- US 7929134 B, Hu
- US 2012024298 A, Saxer
- US 8102537 B, Akishiba

**In der Beschreibung aufgeführte Nicht-Patentliteratur**

- **W. A. TRAUB.** Constant-dispersion grism spectrometer for channeled spectra. *JOSA A,* 1990, vol. 7 (9), 1779-1791
- **GELIKONOV et al.** Linear-Wavenumber Spectrometer for High-Speed Spectral-Domain Optical Coherence Tomography. *Optics and Spectroscopy,* 2009, vol. 106 (3), 459-465
- **HU et al.** Fourier domain optical coherence tomography with a linear-in-wavenumber spectrometer. *Optics Letters,* 2007, vol. 32 (24), 3525-3527